# EUROPEAN PATENT APPLICATION

(11) **EP 2 589 580 A1**
(43) Date of publication of application: **08.05.2013**
(21) Application number: 12190639.0
(22) Date of filing: 30.10.2012
(51) Int. Cl.: C04B 35/565

(54) **A spherical alpha-type crystal silicon carbide, the method for manufacturing the same, and a sintered body as well as an organic resin-based composite made from the silicon carbide**

(30) Priority: 01.11.2011 JP 2011240305
(71) Applicant: Shinano Electric Refining Co., Ltd., Tokyo 101-0045 (JP)
(72) Inventor: Shimizu, Takaaki, Nagano, 389-1305 (JP); Mochizuki, Masahiro, Nagano, 389-1305 (JP)
(74) Representative: Solf, Alexander

(57) **Abstract**

A spherical α type crystal silicon carbide powder having an average particle diameter is of 5 µm - 60 µm, specific pore volume of the inside pores in it having a diameter of 1 µm or smaller is 0.02 cc/g or smaller, specific surface area of it is 1 m²/g or smaller, and average aspect ratio (short diameter / long diameter) of it is 0.65 or higher is proposed; a method for manufacturing the same including the steps of (1) spray-drying a slurry of a raw material silicon carbide powder which has an average particle diameter of 1 µm or smaller and has an α type crystal, to obtain porous and spherical particles, and (2) sintering the thus obtained porous and spherical particles, is also proposed.

## Description

### [Priority Claimed]

The present non-provisional application claims priority, as per Paris Convention, from Japanese Patent Application No. 2011-240305 filed on November 1, 2011, the disclosure of which is hereby incorporated by reference herein in its entirety.
The present inventions relate to a spherical silicon carbide and, in particular, to a sphericalαtype crystal silicon carbide particle, which has a densified inner portion and is 5 µm to 60 µm in diameter; a method for manufacturing the same; and also relate to a sintered body or an organic resin-based composite made from such silicon carbide.

### [Background of the Invention]

Since, the silicon carbide has a high thermal conduction property and high temperature resistance as well as high hardness, it is utilized to make a molded grindstone, organic polymer-based high thermal conductive composite, and molded devices being used for a semiconductor manufacturing apparatus.
In these uses, the fine powder of silicon carbide is mixed with a matrix such as poval, phenol resin and epoxy resin or with a binder such as methyl cellulose, together with any of various molding assistants, then the resulting mixture is polymerized. The obtained polymerized product is either pressurized or heated to form viscous varnish, film or a sintered structure body etc.

As is surmised from the fact that it is useful as a loose grinding powder for a wire saw to cut various ingots made of such materials as silicon and quartz or for wafer lapping, pulverized silicon carbide, as it is, has an amorphous shape having sharp edges. This is a favorable feature to obtain the composite made of the silicon carbide and various polymers, since the higher addition ratio of silicon carbide powder results higher performance with respect to the properties of hardness, thermal conduction and thermal resistance; however, the effort to increase the addition ratio is thwarted by the fact that the shape of the powder is amorphous.

Also, in the cases of a plastic molding process and a slip casting process, which are preliminary steps to obtaining a sintered structure body, there is a limit in filling a precursor with silicon carbide powder to a higher density on account of the fact that the shape of the silicon carbide is amorphous; therefore it has been difficult to increase the density of the sintered body to its true density.

Now, in cases of oxide ceramics other than silicon carbide, such as alumina, silica, zirconia, titania, and magnesia, spherical particles are obtained (ref. "ADMAFINE", a brochure of Admatechs Company Limited).
In the case of these substances, the spherical particles are manufactured, for example, by introducing the respective metallic powder into a fire whereby the powder is oxidized and melted at the same time (ref. Patent document 1). A method for manufacturing spherical particles of silicon carbide, which is similar to the method described above, is proposed (ref. Patent document 2); however, there is no description with regard to the purity of the silicon carbide thus obtained.
Incidentally, the melting point of silicon carbide is high (2500 °C or higher), and its oxidation reaction starts at a temperature in the vicinity of 1000 °C under an oxidizing atmosphere, therefore it undergoes oxidation combustion in the fire, and a considerable part of it turns silicon oxide.

In fact, according to JIS R6124 (Method for chemical analysis of silicon carbide abrasives), all carbons (both carbon of silicon carbide molecule and free carbon) are subjected to oxidation combustion at a temperature between 1,300 °C and 1,350 °C in the presence of a combustion improver, and from the amount of the CO₂ created by this combustion is subtracted an amount of CO₂ which is created when only the free carbon is subjected to oxidation combustion at 850 °C for 5 minutes, and from the result of this subtraction the content of silicon carbide is calculated. This analytical method is based on the fact that although silicon carbide cannot be prevented from undergoing oxidation at a temperature of 850 °C or higher, it does not burn during the first 5 minutes unlike free carbon.

It is known that a spherical particle of silicon carbide is produced by spray drying a slurry made of a mixture of water glass and sugary sucrose to thereby obtain a spherical precursor having a diameter (an average grain size) of 10 - 20 µm, and then sintering it at a temperature from 1,300 °C to 1,600 °C (Non-patent document 1); however, in this method, only β crystal is obtained and α crystal is not obtained. Furthermore, an initial particle diameter of 10 - 20 µm is not maintained but only grains of fused aggregates consisting of spherical particles having a minute diameter of 10 - 20 nm are obtained.

A method wherein infinitesimal particles of silicon carbide having an average diameter of about 1 µm is mixed with an organic polymer as a binder, which is converted to a carbon source by calcination, to produce grains, then the grains are calcined at 1800 °C, and thereafter molten metallic silicon is introduced into the internal pores produced by the calcination, utilizing the capillary phenomenon, in order to make the silicon react with carbon residue to thereby obtain densified spherical silicon carbide particles is proposed (Patent document 3); however, obtained silicon carbide particles have an average diameter of 1 mm or greater, and they are too large.

Further, a method for obtaining spherical silicon carbide particles having an average particle diameter of 0.05 - 4.5 µm, wherein a raw material polycarbosilane is granulated in a poor solvent, and thereafter the granulated polycarbosilane is sintered at a temperature of 1,300 °C - 1,400 °C was proposed (Patent document 4); however, this method has a disadvantage of having to use the expensive polycarbosilane as a raw material, and what is more its shape is amorphous, and furthermore, in the light of the temperature adopted for sintering, it is suspected that the densification is incomplete.

As described above, a spherical silicon carbide particle which is an α type crystal having an average particle diameter of 5 - 60 µm, and inside of the particle is densified has not been known so far.

### [Prior Art Documents]

### [Patent Documents]

[Patent Document 1] Japanese Unexamined Patent Publication Tokkaisho 60-255602 (1985)
[Patent Document 2] Japanese Unexamined Patent Publication Tokkai 2009-226399
[Patent Document 3] Japanese Unexamined Patent Publication Tokkai 2002-128565
[Patent Document 4] Japanese Unexamined Patent Publication Tokkai 2007-112693

### [Non-Patent Document]

[Non-Patent Document 1] Materials Science and Technology 2009, vol.25, No.12, p1437

### [Summary Of The Invention]

### [Problems To Be Solved By The Invention]

Therefore, the first object of the present invention is to provide a spherical silicon carbide particle, which is an α type crystal having a diameter of 5 - 60 µm and inside of it is densified.
The second object of the present invention is to provide a method for manufacturing a spherical silicon carbide particle, which is an α type crystal having a diameter of 5 - 60 µm and inside of it is densified.
The third object of the present invention is to provide a sintered body or a composite with organic resin, produced by using such silicon carbide particle as a raw material, which is excellent in hardness, thermal conductance and heat resistance.
In order to attain the above-mentioned objects, the present inventors diligently investigated and, as a result, found that it is possible to obtain such desired spherical silicon carbide particles with ease by, at first, producing porous and spherical silicon carbide particles by means of spray-drying method, then sintering these particles to obtain secondary particles consisting of the spherical particles which are partly and weakly fused each other and inside thereof is densified, and then crushing the secondary particles, and thus completed the present invention.

### [Means to Solve the Problems]

Therefore, the present invention lies in a spherical α type crystal silicon carbide **characterized in that** the silicon carbide has, (1) an average particle diameter of 5 - 60 µm, (2) pores having a diameter of 1 µm or smaller to the extent that its inner pore specific volume is 0.02 cc/g or smaller, (3) a specific surface area of 1 m²/g or smaller and (4) an average aspect ratio (short diameter/long diameter) of 0.65 or higher; the present invention also lies in a manufacturing method for making such a silicon carbide and a sintered body or an organic resin composite made from such a silicon carbide.
The manufacturing method of the present invention is characterized by comprising steps of (1) spray-drying a slurry of a raw material silicon carbide powder which is an α type crystal having an average particle diameter of 1 µm or smaller, to thereby obtain porous and spherical particles, and (2) sintering the thus obtained porous and spherical particles. In the present invention, it is preferable that the above-mentioned sintering is conducted at a temperature of 1900 °C - 2,300 °C, and that the sintering time is from 1 hour to 5 hours. Also, it is preferable to add a step (3) wherein, out of the particles obtained by the sintering, those particles consisting of aggregates of the spherical particles that are partly and weakly fused each other are crushed; and it is preferable to use a pusher-type furnace as a sintering furnace.

### [Effects Of The Invention]

The silicon carbide particle of the present invention is a densified spherical silicon carbide particle having a particle diameter of 5 - 60 µm, therefore, the filling ratio of it, when it is mixed with a matrix such as poval, phenol resin and epoxy resin or with a binder such as methyl cellulose together with any of various molding assistants followed by a polymerization to obtain a viscous varnish, film or a sintered structure body, by pressurizing or heating the mixture, can be improved. Furthermore, in the case of obtaining a sintered structure body, because it is possible to obtain a precursor that is packed with silicon carbide at a high density during the plastic moulding stage or the casting stage, which are preliminary stages, it is possible to increase the density of the resulting sintered body.

### [Brief Description Of Drawings]

[Fig. 1]

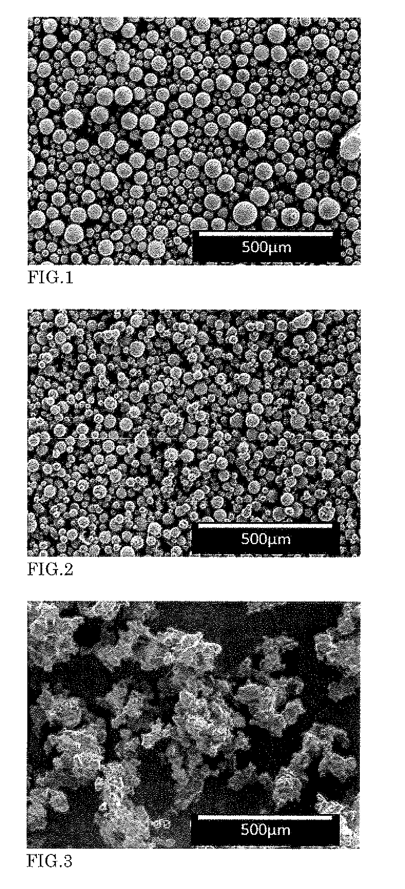

   Fig. 1 is a drawing of a porous spherical silicon carbide particle, expressed by the photography, which was obtained by spray-drying a slurry containing silicon carbide.
[Fig 2]
   Fig. 2 is a drawing of a spherical α type crystal silicon carbide particle of the present invention, expressed by the photography.
[Fig. 3]
   Fig. 3 is a drawing, expressed by the photograph, which proves that the silicon carbide particles obtained from a raw material silicon carbide of β type crystal are not spherical.
[Fig. 4]

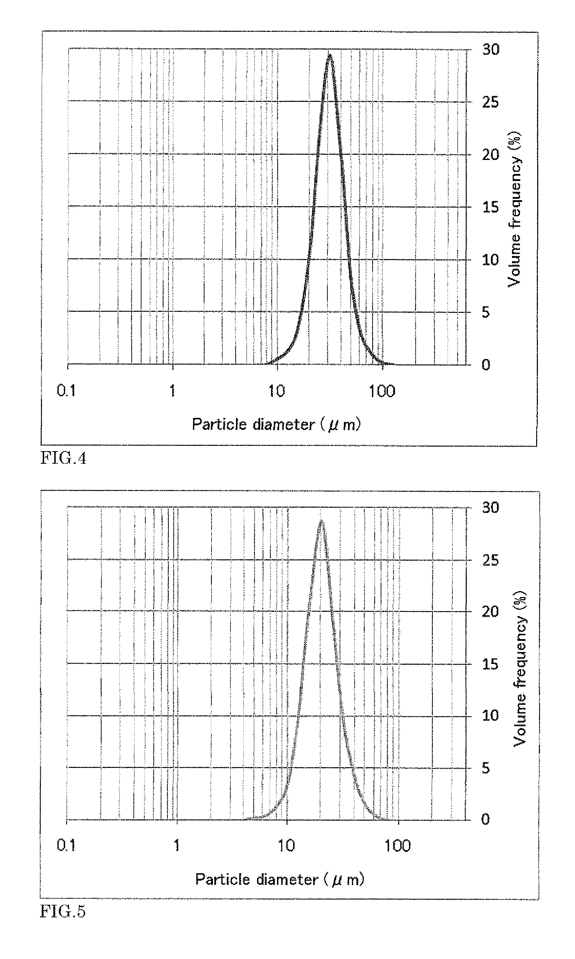

   Fig. 4 is a graph, which shows that an average diameter of the spherical particles obtained in Example 1 is 35.2 µm.
[Fig. 5]
   Fig. 5 is a graph, which shows that the average diameter of the spherical particles obtained in Example 2 is 21.7 µm.
[Fig. 6]

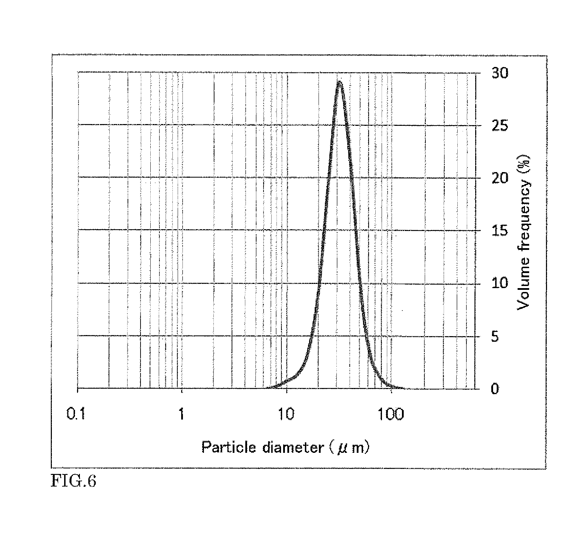

   Fig. 6 is a graph, which shows that an average diameter of the spherical particles obtained in Comparative example 1 is 36.1 µm.

### [Embodiments For Carrying Out The Invention]

A manufacturing method of the present invention will be explained step by step below.

### <Spray-dry step>

A spray-dry step adopted in the present invention is a step to obtain porous and spherical particles having an average particle diameter of 5 - 60 µm, by spraying a slurry made of a raw material silicon carbide fine powder dispersed in a solvent in a drying room using a spray dryer to thereby dry the slurry. With respect to this step, it has been well known to spray and dry the slurry in a drying room using a spray dryer to obtain fine particles; however, the present invention is characteristic in that in this step a raw material silicon carbide of α type crystal having an average diameter of 1 µm or smaller is specially adopted as the starting silicon carbide fine powder.
Incidentally, the average particle diameter as referred to in the present invention is an average value of diameters, which were measured in accordance with JIS R1629, using Microtrac HRA, which is a laser diffraction type particle diameter distribution analyzer, manufactured by NIKKISO CO., LTD.

In a case where a silicon carbide of β type crystal is used as the starting raw silicon carbide, it is not possible to maintain the sphere shape of the particles when a densification of the porous spherical particles occurs in the sintering step carried out after the spray-drying, wherein the porous spherical particles are formed, because the velocity of the crystal growth progressed by crystal transition in the sintering step is faster than the velocity of the densification (pore elimination) which is taken place at the same time.

The product silicon carbide particles of the present invention have particle diameters ranging from 5 µm to 60 µm, so that when a granulated porous particles having diameters of less than 20 µm are formed using the spherical and large-diameter starting particles after smoothening their surface, there remains, after sintering, unevenness in the particle surface which originates from the starting particle, and hence it is not possible to manufacture spherical particles having even surfaces. Therefore, in a case where it is intended to make the diameter of the porous spherical particle formed by spray-drying be less than 20 µm, it is preferable that the average particle diameter of the raw material silicon carbide is 1 µm or smaller.

As for the solvent in the above slurry, it is possible to use, besides water, a suitable organic solvent such as methanol, but use of water is favorable in view of avoidance of dangers such as ignition.
Also, it is preferable that the solid concentration of the slurry is from 10 mass % to 60 mass %. The solid concentration of the slurry is one of the factors to determine the particle diameters of the porous particles to be granulated. In the case of a lower solid concentration, the particle diameters of the resultant porous particles are smaller, and in the case of a higher solid concentration, they are larger. When the solid concentration is 10 mass % or lower, the effect of further decreasing of the particle diameter is lost, while the productivity is lowered; when the solid concentration is 60 mass % or higher, the effect of further increase of the particle diameter is lost, while the viscosity is further increased to make it impossible to conduct a stable spraying.

It is preferable, for the purpose of forming single-body particles, to spray-dry the slurry to which a dispersing agent is added so as to prevent agglomeration of the particles, which would bring about the formation of the coarse and large particles. Recommended dispersing agents for this include a condensation polymer made from naphthalenesulfonate and formalin, a condensation polymer made from phenolsulfonate and formalin, a polystyrenesulfonate, a polyacrylate, a hexametaphosphate, a phosphate, a phosphonate, an acetylenic alcohol, an acetylenic glycol derivative, and a silicone based surfactant. In the present invention it is preferable that one of these dispersing agents is added in an amount from 0.1 mass % to 5 mass %.

Also, for the purpose of promoting the densification of the porous particles themselves at the time of sintering, it is preferable that a sintering assistants is added to the slurry for spraying before spray drying. Examples of such sintering assistants include boron nitride, carbon, a mixture of boron oxide and carbon, and alumina. In the present invention it is preferable that any of these sintering assistants are added in an amount from 0.5 mass % to 5 mass %.

As for the spraying method for spray drying, there are a fixed type spraying method using pressurized two-fluid nozzle and a spraying method using a rotary disk, but in a case where spraying involves a slurry containing a ceramic of high hardness such as silicon carbide, it is preferable to adopt the rotary disk type spraying method, in which the nozzle experiences less severe abrasion, in contrast to the pressurized two-fluid nozzle of the fixed type spraying method, which incurs a high abrasion.

In the case of rotary disk type, the rotation speed of the rotary disk becomes one of the factors to determine the grain size of the granulated porous particles. The higher the speed of rotation becomes, the smaller the particle diameter of the particles becomes, and the lower the speed of rotation becomes, the larger the particle diameter of the particles becomes. In the present invention, the preferable rotation speed is from 8,000 rpm to 25,000 rpm. When the rotation speed is 8,000 rpm or less, it is difficult to obtain single (not aggregated) spherical particles, and even if the rotation speed is 25,000 rpm or more, there is no expectation of obtaining the furthering effect of reducing the particle diameter.

The amount of the air introduced, the temperature and other parameters of the introduced air, and the operation conditions of the spray dryer are determined within the normally adopted ranges. The porous spherical particles that have been spray-dried are collected in a collection trap, a cyclone, a bag filter or the like, which are installed on the downstream side.

### <Sintering Step>

The sintering step in the present invention is a step where the porous spherical particles obtained in the preceding step are retained at a predetermined temperature for a predetermined time period in an atmosphere of argon to thereby obtain the sphericalαtype crystal silicon carbide particles having an average particle diameter from 5 µm to 60 µm and inside of it is densified.
If nitrogen is used as the sintering atmosphere, silicon nitride is produced; therefore, in the present invention, the argon atmosphere is preferred.

In order to judge whether the inside of the particles is denssified by the sintering, the present invention adopts an ascertainment method which takes into consideration both a pore volume as measured by the mercury press-in method (JIS R1655) and a specific surface area as measured by the BET method (JIS R1626). As a pore contained inside the sintered particle has a size (diameter) of 1 µm or smaller, the measurement targets the pore sizes in this range. Normally, the specific volume of pores having a diameter of 1 µm or smaller, which exist in a spray-dried porous spherical particle, is 0.1 cc/g or larger and the specific surface area of the same is 10 m²/g. As the density is increased during the sintering, these values are both decreased. In the present invention, in cases where the specific volume of the pores having diameters of 1 µm or smaller, which exist inside the particle, is 0.02 cc/g or smaller, or preferably 0.01 cc/g or smaller, and at the same time the specific surface area is 1 m²/g or smaller, or preferably 0.5 m²/g or smaller, the particle is considered as densified particle.

If the densification is incomplete, the thermal conductivity of the raw material, which is consisting of the silicon carbide particles of the present invention and is used as the raw material to make a structure or an organic resin composite, becomes insufficient, and thus unfavorable. Therefore, in order to attain the complete densification, it is preferable to conduct the heat treatment at a higher temperature and for a longer time; however, in such a case there is a fear of incurring strong agglomeration of the particles and over magnification of the crystals which would lead to impossibility of maintaining sphere shape. Since the dispersed discrete spherical particles bring about high density filling and thus high thermal conductivity, it is preferable in the present invention to prevent fusion among the particles and deterioration of sphere shape.
The above-mentioned organic resin composite can be made by mixing the silicon carbide particles of the present invention with an organic resin such as poval, phenol resin and epoxy resin, and letting them undergo polymerization under increased pressure and / or heat. Specific examples of such an organic resin composite include viscous varnish, film and a sintered structure body.

The sphere shape according to the present invention is rated by the average aspect ratio (short diameter / long diameter) of the particles. If this ratio is 1.0, it means that all the particles are perfect sphere, and as the ratio decreases the particles become less spherical progressively. The measurement of the short diameter and the long diameter is conducted by a dynamic image analytical method, which consists of passing some slurry through a cell, in which particles are suspended in a dispersing medium such as water, taking pictures of the passing particles with a high resolution CCD camera, and making a numerical analysis of the pictures. With this method, it is possible to take the measurement data of numerous particles in a short period of time. An example of an instrument to do this measurement is "Dynamic Image Analytical Method/Particle (State) Analyzer PITA-2" manufactured by SEISHIN ENTERPRISE CO., LTD.

In order to densify the core of the particle and maintain its sphere shape, it is necessary to control the sintering temperature and the sintering time. The sintering temperature is preferably from 1,900 °C to 2,300 °C, and depending to the sintering temperature, the corresponding sintering time should be from 1 hour to 5 hours. If the sintering temperature is 1,900 °C or lower, the time required for the densification becomes so long that the productivity becomes low. If the sintering temperature is 2,300 °C or higher, the densification of the inner part of the particle and the strong fusion between the particles and the resulting magnification of the crystal proceed simultaneously so that it becomes difficult to control the two mutually conflicting goals of densification and maintaining the sphere shape by adjusting the sintering time. Even if the sintering temperature and the corresponding sintering time are within the appropriate range as described above, the higher sintering temperatures will allow the shorter time for the densification, and in contrast, the lower sintering temperatures will need the longer time for the densification.

When the densification is conducted in a batch-system furnace, it takes a long time to raise the temperature to a desired point since such a furnace is designed with high temperature specification and thus highly insulated, and then similarly once the high temperature point is attained, it takes a long time again to cool down even after the power source is switched off, and as the result it is difficult to control the sintering temperature and the sintering time with precision. In contrast to this, in the case of using a pusher-type furnace for sintering, it is possible to control freely the time length during which the sintered object is retained in the furnace by means of the adjustment of a conveying speed, and thus it is possible to obtain a sintering temperature and a sintering time suitable to the purpose, so that this would be a preferable choice for the present invention.

Incidentally, what is meant by the pusher-type furnace herein is a furnace which is equipped with a heating means and is capable to transporting porous spherical particles across a space of argon atmosphere heated to a desired temperature and thus effecting a sintering within the transportation time period. In this operation, the transportation of the porous spherical particles may be either continuous or step-wise. Furthermore, the porous spherical particles may be filled in a heat-resistant frame-work container, or directly layed on a moving bed. The sintering time is controlled by an adjustment of the in-furnace retention time, and thus by the transportation speed.

In this way, it is possible to obtain spherical silicon carbide particles which are densified and are considerably free of fusion between themselves; however, particle agglomerates which are produced as the particles fuse together are formed in part. If the manufacturing conditions of the present invention described above are followed, the fusion occurs only weakly so that by subjecting the particles to a treatment by a moderate breakup means such as an air jet-type sifter, a vibrating sieve, a supersonic wave sieve, and a stirrer cracking machine, it is possible to turn the agglomerate particles to discrete spherical particles. If the particles are subjected to a treatment by a strong breakup means such as a mortar, a ball mill, an impact cracking machine, and a jet mill, the discrete silicon carbide particles are also broken so that the sphereness can not be maintained.
The present invention will be described in further detail by using examples and comparative examples, but the present invention is not limited to those examples.

### [Example 1]

A slurry prepared by mixing 800 g of α type crystal silicon carbide powder having an average particle diameter of 0.6 µm, 1200 g of water, 12 g of boron carbide (B₄C), which is a sintering assistant, 11 g of carbon (C), and 16 g of a dispersant called Serna D-305 (manufactured by CHUKYO YUSHI CO., LTD.), of which main component is a polycarboxylic ammonium salt, was spray-dried and 588 g of porous spherical silicon carbide particles, shown in Fig. 1, was obtained. The particles' pore diameter was 1 µm or smaller and the inner pore specific volume was 0.305 cc/g, and the particles' specific surface area was 15.2 m²/g.
The thus obtained porous particles were poured in a framed container and brought into a pusher-type furnace; after sintering the particles at 2,200 °C for 3.0 hours, the particles were cracked by an air jet-type sifter for 5 minutes, and the silicon carbide spherical particles shown in Fig. 2 were obtained.
The average particle diameter of the spherical particles was 35.2 µm (Fig. 4), and it was confirmed by means of X ray diffraction that the particles were α type crystal silicon carbide. Also, the specific volume of the inner pores having a diameter of 1 µm or smaller was 0.001 cc/g, the specific surface area was 0.10 m²/g, and the average aspect ratio (short diameter / long diameter) was 0.82.

### [Example 2]

Porous particles, which were obtained in the same manner as Example 1 except that the amount of water used was 4,800 g, were poured in a framed container and brought into the pusher-type furnace; after sintering the particles at 2,200 °C for 3.0 hours, the particles were cracked by an air jet-type sifter for 5 minutes, and the α type crystal silicon carbide spherical particles were obtained.
The average particle diameter of these spherical particles was 21.7 µm (Fig. 5), and the specific volume of the inner pores having a diameter of 1 µm or smaller was 0.005 cc/g, the specific surface area was 0.26 m²/g, and the average aspect ratio (short diameter / long diameter) was 0.75.

### [Comparative example 1]

Porous particles obtained in the same manner as Example 1 were poured in a framed container and brought into the pusher-type furnace and were sintered at 1,800 °C for 5 hours, and thus silicon carbide spherical particles were obtained.
The average particle diameter of these spherical particles was 36.1 µm (Fig. 6), and it was confirmed that the particles were α type crystal silicon carbide by means of X ray diffraction. However, in this case, the specific volume of the inner pores having a diameter of 1 µm or smaller was 0.050 cc/g, the specific surface area was 1.96 m²/g, and the average aspect ratio (short diameter / long diameter) was 0.75.

### [Comparative example 2]

Porous particles, which were obtained in the same manner as Example 1 except that the starting silicon carbide powder was replaced by β crystalline powder having an average particle diameter of 0.8 µm, were poured in a framed container and brought into the pusher-type furnace and were sintered at 2,200 °C for 3 hours.
The shape of the particles thus obtained was as shown in Fig. 3, and the spherical feature was not preserved.

### [Industrial Applicability]

When it is used to make a composite with various polymers, the silicon carbide powder of the present invention is capable of being incorporated at a high compact ratio, and thus can further improve the high hardness, high thermal conductivity and high thermal resistance of the said composite; in addition to this, in the case of obtaining a sintered structure body, it becomes possible to obtain a precursor which is packed with silicon carbide particles at a high density at the plastic molding stage and the slip casting stage, which are preliminary stages to obtaining a sintered structure body, and hence heightening of the density of the sintered body is achieved, thereby adding to its industrial usefulness.

## Claims

1. Spherical α type crystal silicon carbide **characterized in that** its average particle diameter is from 5 µm to 60 µm, specific pore volume of inner pores in it having a diameter of 1 µm or smaller is 0.02 cc/g or smaller, its specific surface area is 1 m²/g or smaller, and its average aspect ratio (short diameter/long diameter) is 0.65 or higher.

2. A method for manufacturing the spherical α type crystal silicon carbide as described in Claim 1, comprising steps of (1) spray-drying a slurry of a raw material silicon carbide powder which is an α type crystal and has an average particle diameter of 1 µm or smaller to obtain porous and spherical particles, and (2) sintering the thus obtained porous and spherical particles at the temperature from 1,900 °C to 2,300 °C.

3. The method for manufacturing the spherical α type crystal silicon carbide as described in Claim 2, wherein the said sintering step (2) is conducted for 1 to 5 hours.

4. The method for manufacturing the spherical αtype crystal silicon carbide as described in Claim 2 or 3, which includes a step (3) of cracking those particles among the particles obtained by the sintering which are agglomerates consisting of particles fused together.

5. The method for manufacturing the spherical α type crystal silicon carbide as described in any Claims of 2-4, wherein the sintering is conducted by using a pusher-type furnace.

6. A sintered body **characterized by** being manufactured using the spherical α type crystal silicon carbide described in Claim 1 as a raw material.

7. An organic resin-based composite comprising of organic matrix and the spherical α type crystal silicon carbide described in Claim 1.

8. The organic resin-based composite described in claim7, wherein the organic matrix is at least one material selected from the group consisting of a poval, phenol resin and epoxy resin.
